# EUROPEAN PATENT SPECIFICATION

(11) **EP 2 763 136 B1**
(45) Date of publication and mention of the grant of the patent: **06.04.2016**
(21) Application number: 13382034.0
(22) Date of filing: 04.02.2013
(51) Int. Cl.: G10L 15/26, H04M 3/42, G10L 15/08

(54) **Method and system for obtaining relevant information from a voice communication**
Verfahren und System zum Erhalten relevanter Informationen aus einer Sprachkommunikation
Procédé et système permettant d'obtenir des informations pertinentes à partir d'une communication vocale

(43) Date of publication of application: 06.08.2014
(73) Proprietor: Telefónica, S.A., 28013 Madrid (ES)
(72) Inventor: Urdiales Delgado, Diego, 28013 Madrid (ES)
(74) Representative: Carpintero Lopez, Francisco

(56) References cited:
- US-A1- 2007 071 206
- US-A1- 2008 201 143
- US-A1- 2010 158 213
- US-B2- 7 599 475

## Description

### TECHNICAL FIELD OF THE INVENTION

Present invention generally relates to the field of speech recognition and more specifically relates to analyzing voice communications in order to automatically extract relevant information from said voice communication and potentially convert to text.

### BACKGROUND OF THE INVENTION

"Speech recognition" is the translation of spoken words into text. It is also known as "automatic speech recognition" (ASR). Nowadays, Automatic Speech Recognition (ASR) systems are primarily targeted to the analysis of individual audio streams, such as those coming from a voice dictation, voice command, or voicemail message. Examples of such systems include those used in commercial voicemail transcription applications, in virtual assistant applications, etc. While it would be useful to have a textual representation of the content of voice calls too, current ASR systems are poorly targeted to the analysis of inter-related audio streams such as those coming from a voice call.

Speech recognition research has been characterized by the steady accumulation of small incremental improvements. There has also been a trend to change focus to more difficult tasks due both to progress in speech recognition performance and to the availability of faster computers. Automated speech-to-text transcription for short voice messages, such as those left in voicemail systems, or for dictation of SMS, or commands, has been available as a service with high levels of accuracy for some time. A natural next step would be to extend this functionality to voice calls, i.e. longer voice communications where two or more parties communicate through voice synchronously. However, it becomes apparent that a full word-by-word transcription of a voice call is not the optimal way of conveying the meaning of the voice conversation for a user.

The problem of analysing the content of a voice call through Automatic Speech Recognition has several specificities which differentiate it from other ASR-related tasks:
Firstly, since at least two parties are included in the voice communication, there are at least two audio streams for one single communication. Depending on the system where the voice communication is made and how the architecture is set up, a single audio stream may be fed into the ASR system, containing the aggregated audio from all parties in the voice communication; or separate audio streams may be fed, one for each individual participant in the voice communication. This differs from other ASR-related tasks in which there is a single non-aggregated audio stream fed to the ASR engine.
Acoustically, since voice call audio is streamed between the parties in the call over a network, it is subject to interferences, packet losses and other degradations. These degradations do not occur when the audio is recorded and sent over the network, instead of streamed in real time.
Linguistically, voice call audio is quite different from other types of voice audio. Since two or more parties are speaking in the call, each audio channel usually contains long silence periods, corresponding to times when that speaker is listening to another party. Voice calls are an online form of communication (the session is alive and voice is transmitted as it is uttered), they are more likely to contain hesitations, improperly constructed sentences, unfinished words or sentences, non-verbal sounds and onomatopoeic words. In all, voice calls contain a smaller proportion of linguistically meaningful words than other communication forms. And, since the parties in a voice call usually know each other; and the real-time nature of a voice call allows for immediate clarification of any misunderstanding, voice calls include ellipses, references to unmentioned concepts or words, and in general language expressions known only to the participating parties with higher frequency than other voice audio types.

Prior art includes examples such as US patent application US 2008/0201143, which describes a system and method to mine the content of audio conversations, with a focus on (but not limited to) monitoring of calls made by inmates in correctional facilities. The system described in that document extracts certain characteristics of the voice call audio. However, that patent application is fundamentally a flagging or control system, whose aim is to identify irregular, suspicious or otherwise unordinary fragments within the voice conversation.

Another solution from prior art is provided in the intelligent call transcript systems and methods disclosed in the US application US2010/158213. A transcription of a phone call is created and supplemented with additional information automatically or upon request. Additional information may be added when key words are detected, such as adding acronym expansion when an acronym is detected or adding identifying information to an important task when mention of the task is detected. Therefore, it is mainly focus on enriching an audio transcript by including extra information.

US patent US 7599475 B2 propose a method and apparatus for revealing business or organizational aspects of an organization in audio signals captured from interactions, broadcasts or other sources. The method and apparatus activate a process to detect events within the audio signal, and then activate a more resource consuming additional process around the detected events, thus enhancing efficiency of the process. The detected events and the output of the additional process are analyzed by an analysis process to reveal business aspects, terms, or other events in the audio signal.

Also the US patent application US 2007/0071206, focused on conversation monitoring in correctional facilities, contemplates both the separation of voice calls into channels (diarization), and the profiting from prosody information in order to improve the detection of unordinary events in voice calls, or pinpoint those calls which would require a manual review. It is limited, however, in that it does not include a systematic approach to the usage of different aspects of the audio information, and not just prosody and text, alone or in combination. Again, this is in line with a goal of controlling or flagging calls, not extracting the relevant information contained in the voice call.

When applied to inter-related audio streams such as those coming from voice calls, current ASR systems as the mentioned above have several shortcomings. Due to the linguistic nature of voice call audio, where many of the words carry no linguistic meaning, many of the sentences are incomplete and words which are onomatopoeic or incomplete also abound, systems which aim at providing a full transcript for the voice call (transcription engines) provide too much information which is of little use.

To overcome this shortcoming, ASR systems which aim at returning only meaningful words or phrases said in the voice call, such as keyword spotting ASR system, can be used.

### SUMMARY OF THE INVENTION

Present invention solves the aforementioned problem of analysing multiple voice audio streams from a voice call to obtain meaningful words containing the relevant information of said call. Therefore, according to claim 1, a method is presented for obtaining relevant information from a provided voice communication between at least two users, wherein the voice communication comprises at least two voice streams (21) belonging to the at least two users, the method comprising the following steps:
a) generating time-stamped markers associated to the at least two voice streams according to certain characteristics extracted from the at least two voice streams (21), wherein, when certain characteristic is common (55) to both voice streams, generating an additional time-stamped marker (54) indicating a correlation between the at least two voice streams (21);
b) extracting (57)certain pieces of information from the at least two voice streams according to some information comprised by the markers;
c) transcribing (58) the certain pieces of information into text to obtain the relevant information of the voice communication.

The channels may not be available separately and the method may include an additional step to solve it consisting on separating the at least two voice streams belonging to the at least two users from the voice communication.

In one embodiment of the invention, the characteristics extracted from the voice streams are taken from the following list: intonation, volume, speech speed and noise. From these characteristics the voice streams are processed in order to generate the time-stamped markers. Said time-stamped markers contain some information, which may be organized in a tuple comprising elements from the following list: an identifier for the voice stream, a start timestamp, an end timestamp, an indication of the type of marker, and other details of the marker.

Proposed invention may comprise the additional step of matching a characteristic from the voice streams against a previously configured pattern. Thus, the generated markers may comprise additional information such as a level of confidence, or the indication of which of the previously configured patterns matched.

One embodiment of the invention also uses speech to text transcription and word spotting to generate markers. Thus, the generated markers may comprise the level of confidence of the transcription or the words spotted.

One embodiment of the invention comprises extracting the piece of information contained within the start and the end timestamps defined in the marker. Depending on the type of marker, the action taken may be extracting the piece of information, from the same voice stream, or from other voice stream than the one indicated by the identifier of the tuple, contained after the start timestamp defined in the marker for a specific duration.

Proposed invention may comprise running the extracted pieces of information through a grammar-based automatic speech recognition system with a specific grammar. And optionally the extracted pieces of information may be run through an automatic speech recognition system with a specific language model.

As an additional step, the method may comprise storing the voice communication in a data storage device, but in some embodiments all the steps are done in real time.

Another aspect of the invention as claimed in claim 12 refers to a system for obtaining relevant information from a provided voice communication between at least two users, wherein the voice communication comprises at least two voice streams belonging to the at least two users, the system comprising:
- a marker generator (22) which receives the at least two voice streams (21) to be analyzed and to generate time-stamped markers according to certain characteristics extracted from the at least two voice streams, wherein, when certain characteristic is common (55) to both voice streams, generating an additional time-stamped marker (54) indicating a correlation between the at least two voice streams;
- an action processor (24) to extract certain pieces of information from the at least two voice streams according to some information comprised by the markers
and transcribing the certain pieces of information into text, thus obtaining the relevant information of the voice communication.

The streams may not be available separately and, the system may include a stream diarization module to separate at least two voice streams, belonging to different users, from the voice communication provided;

The system may also comprise the following modules in the marker generator:
- a voice signal analyzer to measure noise levels in a voice stream and variations in the volume and matching them against previously configured noise and volume patterns;
- a prosody analyzer to detect speech intonation and match it against previously configured patterns;
- an automatic speech recognition engine configured for word spotting, to detect in a voice stream any of the words from a list previously defined;
- an automatic speech recognition engine configured for transcription to measure speech speed in words per time unit;
- a second order analyzer connected to the previous modules to detect repeated markers, markers that occur simultaneously in both the at least two voice streams and evidence of some correlation matching them against correlation patterns.

And the action processor may also comprise the following modules:
- an audio stream chopper to extract an excerpt of a voice stream defined by its start time and end time, or duration;
- an audio speech recognition configured for transcription of a voice stream into text;
- a text processing module to look for specific words, phrases or patterns.

A last aspect of the invention refers to a computer program product comprising computer program code adapted to perform the method of the invention, when said program code is executed on a computer, a digital signal processor, a field-programmable gate array, an application-specific integrated circuit, a micro-processor, a micro-controller, or any other form of programmable hardware.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
**Figure 1****.-** shows a sample of a 2-party voice communication.
**Figure 2****.-** shows a block diagram representing an embodiment of the invention.
**Figure 3****.-** shows another embodiment which adds a diarization module to the embodiment of figure 2.
**Figure 4****.-** shows an embodiment of the marker generator module in detail.
**Figure 5****.-** shows an embodiment of the action processor module in detail.
Figure 6.- depicts the marker generation for a particular embodiment of the invention.
Figure 7.- depicts the action processor for the same particular embodiment than figure 6.

### DETAILED DESCRIPTION OF THE INVENTION

The invention describes a process for, in general terms, analysing inter-related audio streams, such as those coming from voice calls, to extract, and potentially convert to text, the meaningful information contained in the voice communication. A specific case of two-party voice communications is disclosed below in detail according to one embodiment of the invention. However, the method can be generalized for application to a generic n-party voice communication in ways evident to a person skilled in the art.

The method proposed in this invention would identify relevant pieces of information in the voice conversation and present them to the user. A full textual transcription is not a goal of this invention, but focusing on identifying the relevant pieces of information in the voice conversation.
As an intermediate step in the method, processing identifies *markers* in each of the individual voice streams. Markers are defined as time-stamped fragments in an audio voice stream which are marked in order to aid the recognition process. Some characteristics extracted from the audio voice streams are used to generate the markers and even included. It is possible to define a marker as a tuple containing the following characteristics, or fields, according to this embodiment:
- Start time
- End time
- Channel identifier (i.e., for a two-party voice call, whether it is on the caller-party channel or the called-party channel or both)
- Marker type
- Marker details

Individual processing of the voice streams can result in the identification of markers according to several criteria, thus resulting in different marker types. According to this particular embodiment of proposed invention, the markers generated are disclosed below. Once the characteristics to be looked for, have been chosen, the voice streams are matched against previously configured patterns in order to identify the markers:
- Word spotting markers: these markers are identified when a word or a phrase is detected in one of the audio voice streams. An example is a marker for the detection of the phrase "You should note this". In this case, the field of "marker details" of the tuple may contain the word or phrase that was detected.
- Intonation markers: these markers are identified when a certain intonation pattern is detected in one of the audio streams. An example can be a sharp rise in intonation. In this case, the field "marker details" of the tuple may contain information about the intonation pattern that was detected.
- Volume markers: these markers are identified when the volume of the audio in one channel changes in a specific way. An example can be a sustained period of increased speech volume. In this case, the field "marker details" of the tuple may contain information about the change in volume that was detected.
- Speech speed markers: these markers are identified when the speed of the speech in one channel changes in a specific way. An example can be the detection of an interval with slower speech speed. In this case, the field "marker details" of the tuple may contain information about the specific way in which the speech speed changed.
- Noise markers: these markers are identified when certain noise patterns or noise levels are detected in one channel. An example can be an interval with loud music. In this case, the type, level and pattern of the noise can be included in the field "marker details" of the tuple.
- Transcription confidence markers: these markers are identified when a word, or sequence of words, have transcription confidences above or below a certain threshold, or within a specific confidence interval. An example of this can be the detection of a sequence of at least five consecutive words with a confidence level below 50%. Information of the word or words and their respective confidences can be included in the field "marker details" of the tuple.
- Mixed markers: these markers are identified when a combination of other markers occur simultaneously or otherwise in combination. An example can be the simultaneous detection of slower speech speed and low transcription confidence. Information about the individual events that triggered the marker can be included in the field "marker details" of the tuple.

Also a dual processing of the voice streams is made (i.e. simultaneous processing of both voice streams) and so, a second set of markers may be identified according to several criteria. The markers generated from the dual processing reflect different types of correlation between the voice streams, thus resulting in different marker types:
- **Correlation markers:** these markers are identified when a certain condition is fulfilled in both audio channels, where each voice stream of this particular embodiment belongs to a different channel. An example of a keyword spotting-related correlation marker can be "the phrase <note this> and the word <repeat> are said in different channels within a 5 seconds interval". In this case, the fields "marker details" of the tuple may include details on the correlation condition that was fulfilled.
- **Cross-channel repetition markers:** a specific subtype of a correlation marker, cross-channel repetition markers are identified when the same word or phrase is detected in both channels within a certain time interval. An exact match is not required for the cross-channel repetition marker to be identified (i.e. there may be tolerance to slight discrepancies between the words said in one and the other channel). An example is the following dialogue:
   *Channel A: "My number is seven four six"*
   *Channel B: "Seven four six...* "
   *Channel A: "Sixteen"*
   *Channel B: "One six...* "

These lists of marker types are not intended to be exhaustive but they have to be seen as a particular embodiment of proposed invention to complement the summary of the invention without taking into account any limitation derived from this particular embodiment. Of course, different criteria and triggering events can be used for identification of markers, without deviating from the spirit of the described invention.

After the markers have been generated, the method of invention performs certain actions on the voice streams depending on the markers to extract pieces of information potentially relevant from the voice communication. In this particular embodiment the actions that can be taken are:
- Extracting a piece of information specified in the marker contained within the start and end timestamps from the marker, and running it through a transcription engine.
- Extracting the piece of information, not from the voice stream (or channel) specified in the marker, but the other channel, after the end timestamp from the marker, for a specific duration, and running it through a transcription engine.
As a variation, in other embodiment, the piece of information is extracted starting on the first time speech is detected, after the marker timestamp.
- Extracting the piece of information from the other channel (*not* the one specified in the marker) after the end timestamp from the marker, for a specific duration, and running it through a grammar-based ASR engine with a specific grammar.
- Extracting the piece of information from the other channel (*not* the one specified in the marker) after the end timestamp from the marker, for a specific duration, and running it through an ASR engine with a specific Language Model (LM).

Previous actions result in a fragment of text and/or audio extracted from the voice conversation, containing a piece of relevant information. After all markers are processed, the collection of those fragments constitutes a useful representation of the voice conversation.

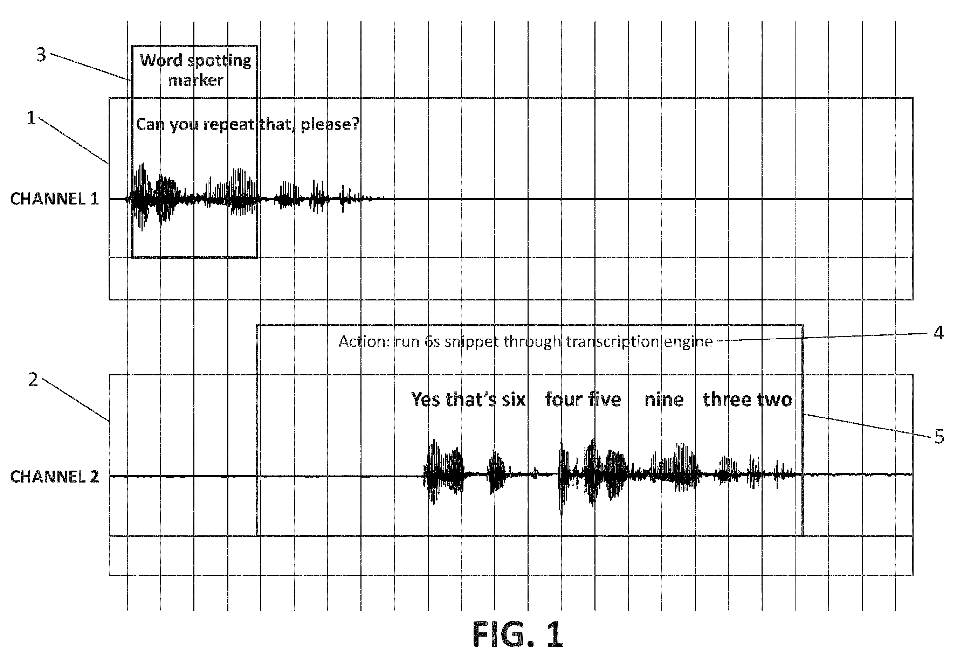

Figure 1 represents a sample of a 2-party voice conversation. Channel 1 (1) graphically depicts a marker identified - specifically, a single-channel word spotting marker (3) for the words "can you repeat"-, and an action (4) associated with it. The action in this example is: "run 6 seconds snippet through a transcription engine". The area of the audio signal encompassed within the marker area (5) represents the audio fragment comprised between the marker's start and end timestamps. The example action depicted is the extraction of the piece of information from the other channel (not the one specified in the marker) from the end timestamp of the marker and for a specific duration of six seconds, followed by its transcription. That six-second window is represented in figure 1 by the area 5 within the signal of channel 2 (2).

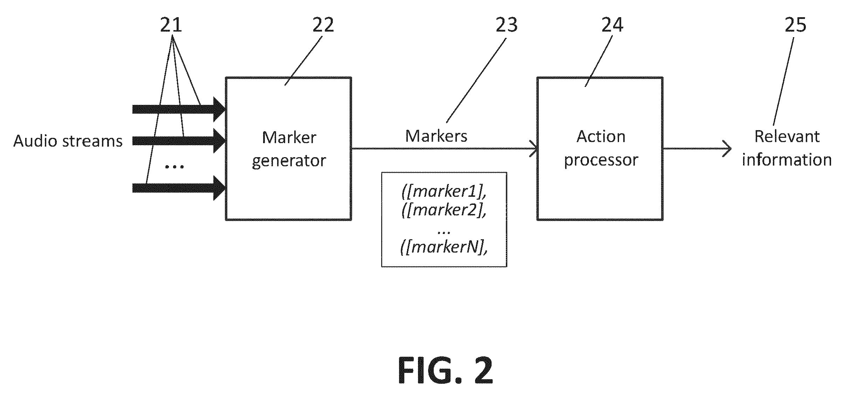

Figure 2 represents the system of the invention. The voice audio streams (21) are provided to a marker generator module (22), which processes the voice audio streams of the voice call and generates the corresponding markers. The input of the marker generator, as it has already mentioned, may comprise several voice audio streams. Once the markers have been generated, said markers (23) are sent to an action processor (24) which takes the markers as input and executes certain actions on the voice audio streams according to some configuration, generating relevant information (25) as a result. Following figures go deeper into the details.

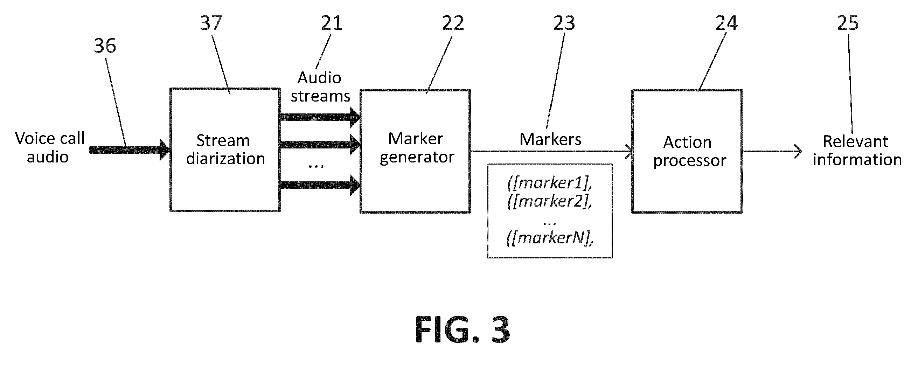

As additional element for the embodiment of the system represented in figure 2, figure 3 represents a speaker diarization module (37). The voice communication (36) is directed to the diarization module to solve the cases when the different channels in the voice communication are not available separately. Then, the speaker diarization module receives the voice communication as one piece and applying speech analysis on the voice communication, said voice communication is partitioned into several streams, each including the parts of the input voice communication where each party speaks. The resulting voice audio streams can then be fed to the marker generator module which is equivalent to that of the system depicted in figure 2.

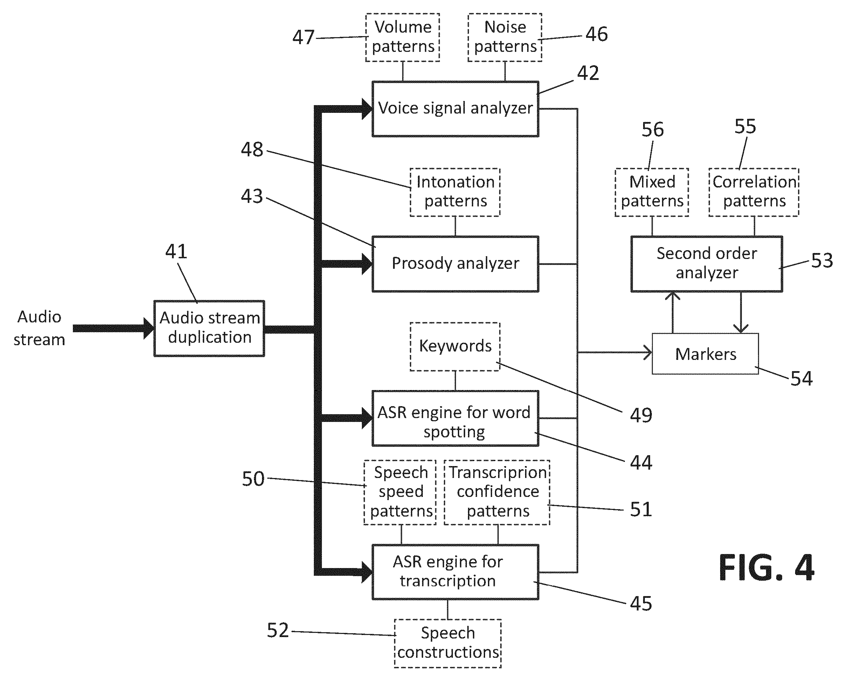

Figure 4 represents a more detailed embodiment of the marker generator module (22). Although just one voice audio stream is depicted, it should be understood that the same instance or a different instance of each the components depicted can be used to process each of the audio streams. For example, in the basic case of a two-way voice conversation, one instance of the audio stream duplication module may act on the first stream, and another instance of that module may act on the second stream, and so on.

An audio stream duplication module (41) duplicates each frame of the incoming voice stream to generate N copies of the voice stream, to be sent to the audio processor modules. The audio processor modules are the modules which process each voice stream to generate the markers. In figure 4, the embodiment represented comprises four audio processor modules:
- A voice signal analyser (42), which is capable of measuring noise levels in the speech signal and variations in the volume of speech, and matching them against previously configured noise patterns (46) or volume patterns (47). This module generates volume markers and noise markers, as described above.
- A prosody analyser (43), which is capable of detecting the speech intonation, and matching it against previously configured intonation patterns (48). The prosody analyser and the voice signal analyser are, in alternative embodiments of the invention, separate modules, or just instances of a Voice Activity Detector (VAD) available in the state of the art.
- An ASR engine configured for word spotting (44), which takes a list of configured words (49) and is able to detect them in the voice audio stream, if present.
- An ASR engine configured for transcription (45), which produces a transcription of the voice audio stream and is able to measure speech speed matching against previously configured speech speed patterns (50) (i.e. words per time unit); to calculate a confidence of the transcription, matching against previously configured transcription confidence patterns (51), of each word or phrase; to look for specific constructions in speech, beyond fixed phrases (such as date expressions or phone numbers). The ASR engine configured for word spotting and the ASR engine configured for transcription are, in alternative embodiments of the invention, separate modules, or just instances of a speech recognition (ASR) engine, each instance configured with different models and/or modes of operation.
- Second order analyzer (53). Whenever a marker is generated by any of the audio processor modules (42, 43, 44, 45), a second order analyser evaluates the set of all generated markers (54). This analysis may result in the generation of one or more second order markers, such as correlation markers if matching the generated markers against previously configured correlation patterns (55) is successful, or mixed pattern markers if matching the generated markers against previously configured mixed patterns (56) is successful. These new markers can again trigger the processing of the second order analyser and, in turn, result in the generation of further markers. Although the configuration of the mixed patterns and correlation patterns prevents this process from falling into infinite loops or long processing times, additional constraints may be set to ensure that. Examples of such constraints are: do not take into account markers that are more than N seconds old; take into account the M last markers generated only.

In addition, according to one embodiment of the invention, the second order analysis may also result in the deletion of one or more markers, according to configured rules. An example of this is to avoid duplicate markers (e.g. two "high voice volume" markers appearing too close in time to each other), or when a new marker generated in second-order analysis renders the first-order markers that triggered it unnecessary (e.g. a certain intonation pattern marker and a word spotting marker for the name of the other participant in the conversation ["John!"] may trigger a "call for attention" second-order marker, which conveys the compound meaning of both first-order markers, making them unnecessary).

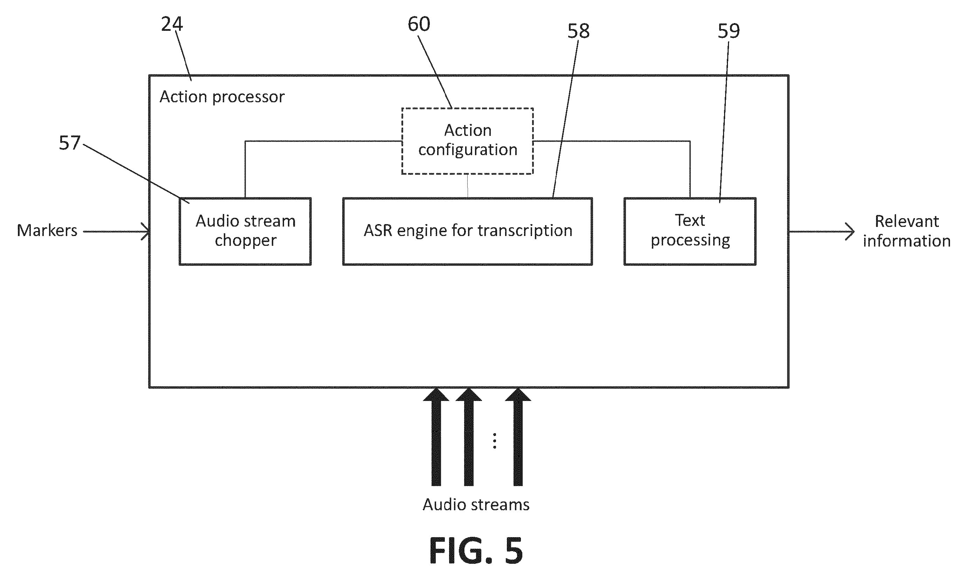

Figure 5 depicts a more detailed embodiment of the action processor module (24). Markers generated by the marker generator module (22) are the input for the action processor module, which perform actions on the voice audio streams according to the information contained in the markers and extracts the relevant information contained in the voice communication.

The action processor module is configured to decide which action corresponds with each marker. The action processor module takes each generated marker, computes the action to perform according to the action configuration (60), then executes it by means of an action execution process. The particular embodiment of figure 5 depicts three different action execution processes as example:
- An audio stream chopper (57) to extract an excerpt of an audio stream defined by its start time-stamp and end time-stamp (or duration).
- An ASR engine configured for transcription (58), to transcribe the speech contained in a voice audio stream or an audio excerpt to text.
- A text processor (59), to look for words, phrases or patterns (grammars) in an input text

The processing of one marker may result in one or more actions; the execution of one action may involve one or more action execution processes (for example, it may involve extracting a 5-second excerpt from an audio stream, running that excerpt through the ASR engine for transcription, then running the transcription through text processing to identify a date pattern). The execution of an action may result in zero or more pieces of relevant information.

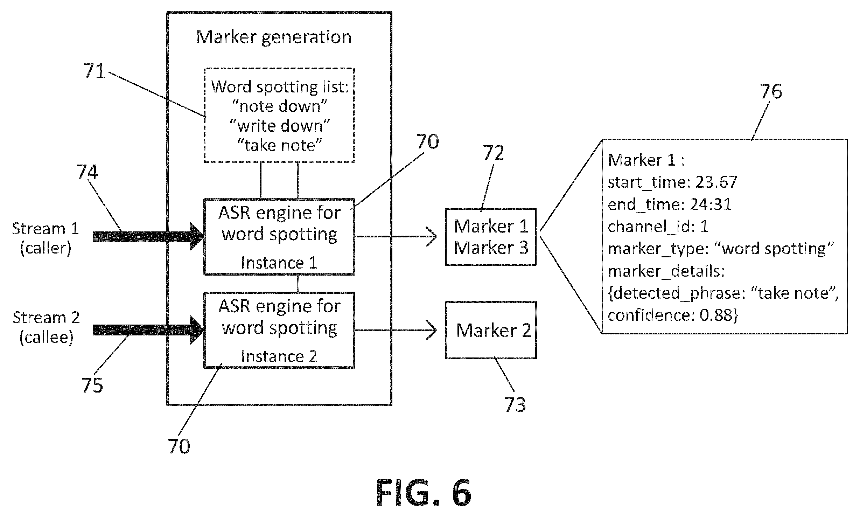

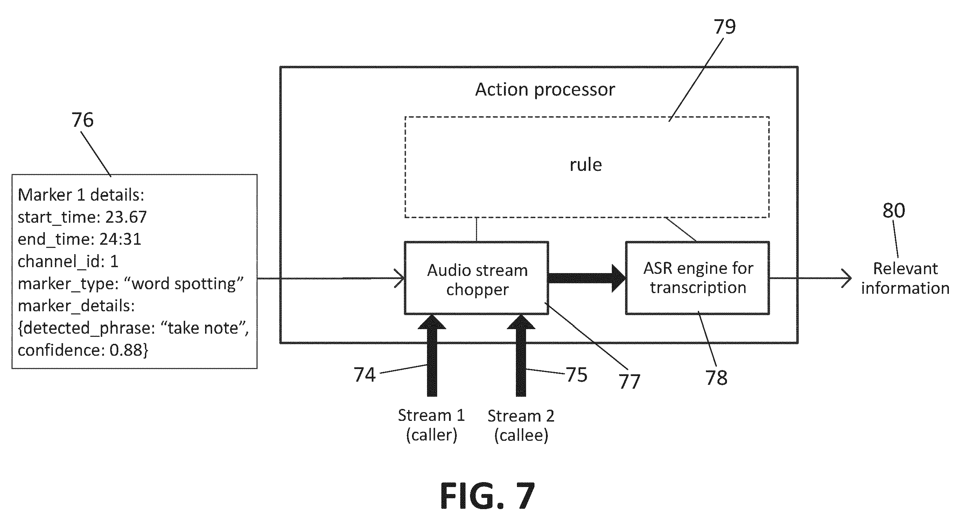

Figures 6 and 7 present a particular embodiment of proposed invention. To provide some clarity, a simplified definition of relevant information is implicit, namely the relevant information only comprises what the parties say after an introductory phrase such as "please note down...", "write down..." or "will you take note of...". In addition, this particular embodiment considers a normal, 2-party call where both channels are available separately for processing.

Specifically figure 6 depicts the marker generation for this particular embodiment. There is one audio processor module, namely an ASR engine for word spotting (70). In figure 6, two instances of the module are alive and in charge of processing each of the audio streams in the voice call. The ASR engine for word spotting is configured to flag each occurrence of the phrases of a word spotting list (71): "note down", "write down", "take note". In figure 6, it is assumed that the caller produces the voice stream 74 and says one of these phrases in two different moments of the voice conversation, thus markers 1 and 3 are generated (72). The callee produces the voice stream 75 and says one of those phrases once during the voice conversation (thus marker 2 is generated (73))
Figure 6 also shows the specific definition of Marker 1 (76), as a tuple containing the start time and end time, the channel it refers to (in this case, channel 1, which is the identification given to the caller), the type of marker (word spotting) and the specific marker details. For a word spotting marker, it is assumed that both the specific phrase that triggered the marker (in this case, "take note") and the confidence of the detection are included.

Figure 7 depicts the action processor module for this particular embodiment. As a continuation of figure 6, which depicts the marker generator of the embodiment, the output (76) is the input of the action processor. The action processor comprises two action execution processes: one audio stream chopper (77) and one ASR engine for transcription (78). A sample action configuration is also shown, containing one rule (79). This rule specifies the actions to be performed on a word spotting marker, as for example "marker 1" (76) namely:
- Extract an excerpt of the channel that the marker refers to, starting 3 seconds after the end time of the marker, and with duration of 15 seconds.
- Transcribe that excerpt.

This rule aims at retrieving the specific piece of information that the speaker was meaning to highlight when he or she said the triggering phrase, which usually comes slightly after saying "note that", "write down", etc.
After the action is applied, a resulting text is obtained, containing the identified relevant information (80).

### An example of a case for may be:

For the rule:
"Action configuration rule #1:
   If marker_type="word spotting":
   Excerpt=Chop(stream_id,end_time +3s,15s)
   Transcribe (excerpt)"

And for the relevant information:
"details my phone number is one eight three four nine double six nine three four five. Let me repeat that in"

As can be seen, the system provides useful information, but the quality of the identified information can be improved in this case by adding, according to another embodiment of the invention, a text processing module as an action execution process, configured to look for phone numbers in an input text.

The method of the invention, according to one particular embodiment, comprises processing each of the voice streams in the voice communication sequentially or, according to another embodiment, in parallel. It can be done in real time (i.e. while the voice communication is ongoing), or after its finalization.

Throughout this document, the terms voice call, voice conversation and voice communication are used interchangeably to mean the synchronous communication of two or more parties through voice. All that is said about voice calls can be applied to video communications, considering the voice-only part of the video communication.

## Claims

1. Method for obtaining relevant information from a provided voice communication between at least two users, wherein the voice communication comprises at least two voice streams (21) belonging to the at least two users, the method comprising the following steps:
a) generating time-stamped markers (23) associated to the at least two voice streams according to certain characteristics extracted from the at least two voice streams, wherein, when certain characteristic is common (55) to both voice streams, generating an additional time-stamped marker (54) indicating a correlation between the at least two voice streams (21);
b) extracting (57) certain pieces of information from the at least two voice streams according to some information comprised by the markers;
c) transcribing (58) the certain pieces of information into text to obtain the relevant information (25) of the voice communication.

2. The method of claim 1 further comprising separating the at least two voice streams belonging to the at least two users from the voice communication.

3. The method according to any one of previous claims wherein the certain characteristics of step a) comprise at least one of the following characteristics: intonation, volume, speech speed, noise.

4. The method according to any one of previous claims wherein the some information comprised by the markers is contained in a tuple which in turn, comprises elements from the following list: an identifier for the voice stream belonging to each user, a start timestamp, an end timestamp, an indication of the type of marker, other details of the marker.

5. The method according to any one of the previous claims further comprising matching a characteristic from the at least two voice streams against a previously configured pattern.

6. The method according to claim 4 wherein the step b) of extracting a piece of information further comprising extracting the piece of information contained within the start and the end timestamps defined in the marker.

7. The method according to claim 4 wherein the step b) of extracting a piece of information further comprising extracting the piece of information, from the other voice stream than the indicated by the identifier of the tuple, contained after the start timestamp defined in the marker for a specific duration.

8. The method according to any one of previous claims further comprising running the extracted pieces of information through a grammar-based automatic speech recognition system with a specific grammar.

9. The method according to any one of previous claims further comprising running the extracted pieces of information through an automatic speech recognition system with a specific language model.

10. The method according any of the previous claims wherein the steps are done in real time.

11. The method according to any of the claims 1-9 further comprising storing the voice communication in a data storage device.

12. System for obtaining relevant information from a provided voice communication between at least two uses, wherein the voice communication comprises at least two voice streams belonging to the at least two users, the system comprising:
- a marker generator (22) which is adapted to receive the at least two voice streams (21) to be analyzed and is adapted to generate time-stamped markers according to certain characteristics extracted from the at least two voice streams, wherein, when certain characteristic is common (55) to both voice streams, being adapted to generate an additional time-stamped marker (54) indicating a correlation between the at least two voice streams;
- an action processor (24) adapted to extract certain pieces of information from the at least two voice streams according to some information comprised by the markers and adapted to transcribe the certain pieces of information into text, thus being adapted to obtain the relevant information (25) of the voice communication.

13. System according to claim 12 further comprising a stream diarization module adapted to separate at least two voice streams, belonging to different users, from the voice communication provided.

14. System according to previous claim, wherein the marker generator further comprising at least one of the following modules:
- a voice signal analyzer adapted to measure noise levels in a voice stream and variations in the volume and being adapted to match them against previously configured noise and volume patterns;
- a prosody analyzer adapted to detect speech intonation and match it against previously configured patterns;
- an automatic speech recognition engine configured for word spotting, adapted to detect in a voice stream any of the words or phrases from a list previously defined;
- an automatic speech recognition engine configured for transcription to measure a speech speed in words per time unit;
- a second order analyzer connected to the previous modules adapted to detect repeated markers, markers that occurs simultaneously in both the at least two voice streams and evidence of some correlation matching them against correlation patterns.

15. System according to claim 12 wherein the action processor further comprising the following modules:
- an audio stream chopper adapted to extract an excerpt of a voice stream defined by its start time and end time, or duration;
- an audio speech recognition configured for transcription of a voice stream into text;
- a text processing module adapted to look for specific words, phrases or patterns.

16. A computer program product comprising computer program code adapted to perform the method according to any of the claims 1-11 when said program code is executed on a computer, a digital signal processor, a field-programmable gate array, an application-specific integrated circuit, a micro-processor, a micro-controller, or any other form of programmable hardware.

## Patentansprüche

1. Verfahren zum Erhalten relevanter Informationen von einer bereitgestellten Sprachkommunikation zwischen zumindest zwei Nutzern, wobei die Sprachkommunikation zumindest zwei Sprachströme (21) aufweist, die zu den zumindest zwei Nutzern gehören, wobei das Verfahren die folgenden Schritte aufweist:
a) Erzeugen von zeitgestempelten Kennzeichnungen (23), die den zumindest zwei Sprachströmen zugeordnet sind, gemäß bestimmten Charakteristika, die von dem zumindest zwei Sprachströmen extrahiert werden, wobei, wenn bestimmte Charakteristika beiden Sprachströmen gemein sind (150), eine zusätzliche zeitgestempelte Kennzeichnung (54) erzeugt wird, die eine Korrelation zwischen den zumindest zwei Sprachströmen (21) anzeigt;
b) Extrahieren (57) bestimmter Informationsstücke von den zumindest zwei Sprachströmen gemäß einigen Informationen, die durch die Kennzeichnungen umfasst sind;
c) Transkribieren (85) der bestimmten Informationsstücke in Text, um die relevanten Informationen (25) der Sprachkommunikation zu erhalten.

2. Das Verfahren gemäß Anspruch 1, das ferner das Trennen der zumindest zwei Sprachströme, die zu den zumindest zwei Nutzern gehören, von der Sprachkommunikation aufweist.

3. Das Verfahren gemäß einem der vorhergehenden Ansprüche, bei dem die bestimmten Charakteristika von Schritt a) zumindest eine der folgenden Charakteristika aufweisen: Intonation, Lautstärke, Sprachgeschwindigkeit, Rauschen.

4. Das Verfahren gemäß einem der vorhergehenden Ansprüche, bei dem die einigen Informationen, die durch die Kennzeichnungen umfasst sind, in einem Tupel enthalten sind, das wiederum Elemente aus der folgenden Liste aufweist: einen Identifizierer für den Sprachstrom, der zu jedem Nutzer gehört, einen Startzeitstempel, einen Endzeitstempel, eine Anzeige der Art von Kennzeichnung, andere Einzelheiten der Kennzeichnung.

5. Das Verfahren gemäß einem der vorhergehenden Ansprüche, das ferner das Abgleichen einer Charakteristik von den zumindest zwei Sprachströmen mit einem vorher konfigurierten Muster aufweist.

6. Das Verfahren gemäß Anspruch 4, bei dem der Schritt b) des Extrahierens eines Informationsstücks ferner das Extrahieren des Informationsstücks aufweist, das in dem in der Kennzeichnung definierten Start- und Endzeitstempel enthalten ist.

7. Das Verfahren gemäß Anspruch 4, bei dem der Schritt b) des Extrahierens eines Informationsstücks ferner das Extrahieren des Informationsstücks von dem anderen Sprachstrom als demjenigen, der durch den Identifizierer des Tupels angezeigt ist, das nach dem in der Kennzeichnung definierten Startzeitstempel enthalten ist, für eine bestimmte Dauer aufweist.

8. Das Verfahren gemäß einem der vorhergehenden Ansprüche, das ferner das Durchlaufenlassen der extrahierten Informationsstücke durch ein grammatikbasiertes automatisches Spracherkennungssystem mit einer spezifischen Grammatik aufweist.

9. Das Verfahren gemäß einem der vorhergehenden Ansprüche, das ferner das Durchlaufenlassen der extrahierten Informationsstücke durch ein automatisches Spracherkennungssystem mit einem spezifischen Sprachmodell aufweist.

10. Das Verfahren gemäß einem der vorhergehenden Ansprüche, bei dem die Schritte in Echtzeit durchgeführt werden.

11. Das Verfahren gemäß einem der Ansprüche 1 bis 9, das ferner das Speichern der Sprachkommunikation in einer Datenspeichervorrichtung aufweist.

12. System zum Erhalten relevanter Informationen von einer bereitgestellten Sprachkommunikation zwischen zumindest zwei Nutzern, wobei die Sprachkommunikation zumindest zwei Sprachströme (21) aufweist, die zu den zumindest zwei Nutzern gehören, wobei das System folgende Merkmale aufweist:
einen Kennzeichnungsgenerator (22), der angepasst ist, um die zumindest zwei zu analysierenden Sprachströme (21) zu empfangen und angepasst ist, um zeitgestempelte Kennzeichnungen gemäß bestimmten Charakteristika zu erzeugen, die von den zumindest zwei Sprachströmen extrahiert werden, wobei, wenn bestimmte Charakteristika beiden Sprachströmen gemein sind (55), derselbe angepasst ist, um eine zusätzliche zeitgestempelte Kennzeichnung (54) zu erzeugen, die eine Korrelation zwischen den zumindest zwei Sprachströmen (21) anzeigt;
einen Aktionsprozessor (24), der angepasst ist, um bestimmte Informationsstücke von den zumindest zwei Sprachströmen zu extrahieren gemäß einigen Informationen, die durch die Kennzeichnungen umfasst sind, und angepasst ist, um die bestimmten Informationsstücke in Text zu transkribieren, und somit angepasst ist, um die relevanten Informationen (25) der Sprachkommunikation zu erhalten.

13. System gemäß Anspruch 12, das ferner ein Stromeintragungsmodul aufweist, das angepasst ist, um zumindest zwei Sprachströme, die zu unterschiedlichen Nutzern gehören, von der bereitgestellten Sprachkommunikation zu trennen.

14. System gemäß dem vorhergehenden Anspruch, bei dem der Kennzeichnungsgenerator ferner zumindest eines der folgenden Module aufweist:
einen Sprachsignalanalysator, der angepasst ist, um Rauschpegel in einem Sprachstrom und Variationen bei der Lautstärke zu messen und angepasst ist, um dieselben mit vorher konfigurierten Rausch- und Lautstärkemustern abzugleichen;
einen Satzmelodieanalysator, der angepasst ist, um Sprachintonation zu erfassen und dieselbe mit vorher konfigurierten Mustern abzugleichen;
eine automatische Spracherkennungsmaschine, die konfiguriert ist für Wortauffindung, die angepasst ist, um in einem Sprachstrom jegliche Wörter oder Ausdrücke von einer Liste zu erfassen, die vorher definiert wurde;
eine automatische Spracherkennungsmaschine, die konfiguriert ist für eine Transkription, um eine Sprachgeschwindigkeit in Wörtern pro Zeiteinheit zu messen;
einen Analysator zweiter Ordnung, der mit den vorhergehenden Modulen verbunden ist, der angepasst ist, um wiederholte Kennzeichnungen, Kennzeichnungen, die gleichzeitig in beiden der zumindest zwei Sprachströme auftreten und Nachweise eines Korrelationsabgleichs derselben mit Korrelationsmustern zu erfassen.

15. System gemäß Anspruch 12, bei dem der Aktionsprozessor ferner die folgenden Module aufweist:
einen Audiostromzerhacker, der angepasst ist, um einen Auszug eines Sprachstroms, der durch seine Startzeit und Endzeit oder Dauer definiert ist, zu extrahieren;
eine Audiospracherkennung, die konfiguriert ist für eine Transkription eines Sprachstroms in Text;
ein Textverarbeitungsmodul, das angepasst ist, um nach spezifischen Wörtern, Ausdrücken oder Mustern zu suchen.

16. Ein Computerprogrammprodukt, das Computerprogrammcode aufweist, der angepasst ist, um das Verfahren gemäß einem der Ansprüche 1 bis 11 durchzuführen wenn der Programmcode auf einem Computer, einem Digitalsignalprozessor, einem feldprogrammierbaren Gatterarray, einer anwendungsspezifischen integrierten Schaltung, einem Mikroprozessor, einem Mikrocontroller oder jeder anderen Form von programmierbarer Hardware ausgeführt wird.

## Revendications

1. Procédé pour obtenir des informations pertinentes à partir d'une communication vocale fournie entre au moins deux utilisateurs, dans lequel la communication vocale comprend au moins deux flux vocaux (21) appartenant aux au moins deux utilisateurs, le procédé comprenant les étapes suivantes :
a) générer des marqueurs horodatés (23) associés aux au moins deux flux vocaux selon certaines caractéristiques extraites des au moins deux flux vocaux, dans lesquels, lorsqu'une certaine caractéristique est commune (55) aux deux flux vocaux, générer un marqueur horodaté additionnel (54) indiquant une corrélation entre les au moins deux flux vocaux (21) ;
b) extraire (57) certains éléments d'information des au moins deux flux vocaux selon des informations comprises par les marqueurs ;
c) transcrire (58) les certains éléments d'information en texte pour obtenir les informations pertinentes (25) de la communication vocale.

2. Procédé selon la revendication 1, comprenant en outre la séparation des au moins deux flux vocaux appartenant aux au moins deux utilisateurs de la communication vocale.

3. Procédé selon l'une quelconque des revendications précédentes, **caractérisé en ce que** les certaines caractéristiques de l'étape a) comprennent au moins une des caractéristiques suivantes : l'intonation, le volume, la vitesse de parole, le bruit.

4. Procédé selon l'une quelconque des revendications précédentes, **caractérisé en ce que** lesdites des informations comprises par les marqueurs sont contenues dans un uplet qui à son tour, comprend des éléments de la liste suivante : un identificateur pour le flux vocal appartenant à chaque utilisateur, une estampille temporelle de début, une estampille temporelle de fin, une indication du type de marqueur, d'autres détails du marqueur.

5. Procédé selon l'une quelconque des revendications précédentes, comprenant en outre l'appariement d'une caractéristique des au moins deux flux vocaux par rapport à une forme configurée au préalable.

6. Procédé selon la revendication 4, **caractérisé en ce que** l'étape b) d'extraction d'un élément d'information comprenant en outre l'extraction de l'élément d'information contenu à l'intérieur des estampilles temporelles de début et de fin définies dans le marqueur.

7. Procédé selon la revendication 4, **caractérisé en ce que** l'étape b) d'extraction d'un élément d'information comprenant en outre l'extraction de l'élément d'information, de l'autre flux vocal que celui indiqué par l'identificateur de l'uplet, contenu après l'estampille temporelle de début définie dans le marqueur pour une durée spécifique.

8. Procédé selon l'une quelconque des revendications précédentes, comprenant en outre le passage des éléments d'information extraits à travers un système de reconnaissance automatique de la parole basé sur la grammaire avec une grammaire spécifique.

9. Procédé selon l'une quelconque des revendications précédentes, comprenant en outre le passage des éléments d'information extraits à travers un système de reconnaissance automatique de la parole avec un modèle de langage spécifique.

10. Procédé selon l'une quelconque des revendications précédentes, **caractérisé en ce que** les étapes sont effectuées en temps réel.

11. Procédé selon l'une quelconque des revendications 1 à 9, comprenant en outre le stockage de la communication vocale dans un dispositif de stockage de données.

12. Système pour obtenir des informations pertinentes à partir d'une communication vocale fournie entre au moins deux utilisateurs, dans lequel la communication vocale comprend au moins deux flux vocaux appartenant aux au moins deux utilisateurs, le système comprenant :
- un générateur de marqueur (22) qui est adapté pour recevoir les au moins deux flux vocaux (21) à analyser et est adapté pour générer des marqueurs horodatés selon certaines caractéristiques extraites des au moins deux flux vocaux, dans lesquels, lorsque qu'une certaine caractéristique est commune (55) aux deux flux vocaux, étant adapté pour générer un marqueur horodaté additionnel (54) indiquant une corrélation entre les au moins deux flux vocaux ;
- un processeur d'action (24) adapté pour extraire certains éléments d'information des au moins deux flux vocaux selon des informations comprises par les marqueurs et adapté pour transcrire les certains éléments d'information en texte, étant ainsi adapté pour obtenir les informations pertinentes (25) de la communication vocale.

13. Système selon la revendication 12, comprenant en outre un module de diarization de flux adapté pour séparer au moins deux flux vocaux, appartenant à des utilisateurs différents, de la communication vocale fournie.

14. Système selon la revendication précédente, **caractérisé en ce que** le générateur de marqueur comprenant en outre au moins un des modules suivants :
- un analyseur de signal vocal adapté pour mesurer des niveaux de bruit dans un flux vocal et des variations du volume et étant adapté pour les apparier par rapport à des formes de bruit et de volume configurées au préalable ;
- un analyseur de prosodie adapté pour détecter une intonation de parole et l'apparier par rapport à des formes configurées au préalable ;
- un moteur de reconnaissance automatique de la parole configuré pour le repérage de mots, adapté pour détecter dans un flux vocal l'un quelconque des mots ou des locutions parmi une liste définie au préalable ;
- un moteur de reconnaissance automatique de la parole configuré pour la transcription afin de mesurer une vitesse de parole en mots par unité de temps ;
- un analyseur de second ordre connecté aux modules précédents adapté pour détecter des marqueurs répétés, des marqueurs qui se produisent simultanément dans les deux des au moins deux flux vocaux et des signes d'une corrélation en les appariant par rapport à des formes de corrélation.

15. Système selon la revendication 12, **caractérisé en ce que** le processeur d'action comprenant en outre les modules suivants :
- un découpeur de flux audio adapté pour extraire un extrait d'un flux vocal défini par son temps de début et son temps de fin, ou la durée ;
- une reconnaissance de la parole audio configurée pour la transcription d'un flux vocal en texte ;
- un module de traitement de texte adapté pour rechercher des mots, des locutions ou des formes spécifiques.

16. Produit de programme informatique comprenant un code de programme informatique adapté pour effectuer le procédé selon l'une quelconque des revendications 1 à 11 lorsque ledit code de programme est exécuté sur un ordinateur, un processeur de signal numérique, un réseau de portes programmable par l'utilisateur, un circuit intégré à application spécifique, un micro-processeur, un micro-contrôleur, ou toute autre forme de matériel programmable.
